# EUROPÄISCHE PATENTANMELDUNG

(11) **EP 1 693 322 A1**
(43) Veröffentlichungstag der Anmeldung: **23.08.2006**
(21) Anmeldenummer: 06405068.5
(22) Anmeldetag: 14.02.2006
(51) Int. Cl.: B65G 39/02, B65G 17/20

(54) **Fördersystem mit auf Laufrollen entlang einer Führung rollenden Förderelementen und Verfahren zur Herstellung der Laufrollen**

(30) Priorität: 21.02.2005 CH 2952005
(71) Anmelder: Ferag AG, 8340 Hinwil (CH)
(72) Erfinder: Eberle, Jürg, 8340 Hinwil (CH)
(74) Vertreter: Frei Patent Attorneys

(57) **Zusammenfassung**

Das Fördersystem weist eine Führung (2) mit Führungsschienen (4) und Förderelemente (1) mit Laufrollen (3) auf, wobei Laufrollen (3) einander gegenüberliegende Führungsschienen (4) zugeordnet sind und/oder Förderelemente (1) Laufrollen (3) mit nicht parallelen Achsen aufweisen, wodurch das System verschiedenst gerichtete Belastungskräfte aufnehmen kann. Die Laufrollen (3) in diesem Fördersystem weisen einen relativ harten Laufmantel (5) mit einer quer zur Förderrichtung ebenen Lauffläche auf, wobei das Laufmantelmaterial mit dem Führungsschienenmaterial für wenig Reibung und wenig Abrieb gepaart sind. Zusätzlich weisen die Laufrollen (3) zwischen dem Laufmantel (5) und dem Rollenkörper (7) einen relativ weichen, elastisch deformierbaren Dämpfungsring (6) auf und die Führungsschienen (4) der Führung (2) sind auf einer Dämpfungsunterlage gelagert mindestens an Förderwegstellen, an denen Lastwechsel auftreten. In einem derartigen Fördersystem bleiben Antriebsleistung, Materialverschleiss und Lärmbelastung auch bei hoher Fördergeschwindigkeit und hoher Förderleistung und bei einer hohen Zahl von Lastwechseln pro Förderweglänge in akzeptierbaren Grenzen und relevant kleiner als für vergleichbare derartige Fördersysteme gemäss dem Stande der Technik.

## Beschreibung

Die Erfindung liegt auf dem Gebiete der Fördertechnik und betrifft ein Fördersystem nach dem Oberbegriff des ersten Patentanspruchs. Das Fördersystem weist eine Führung auf, durch die ein Förderweg definiert wird, sowie Förderelemente, die mit Hilfe eines geeigneten Antriebs auf Laufrollen entlang der Führung rollend bewegt werden. Die Erfindung betrifft ferner ein Verfahren nach dem Oberbegriff des entsprechenden, unabhängigen Patentanspruchs, welches Verfahren zur Herstellung der Laufrollen für das erfindungsgemässe Fördersystem dient.

Das Fördersystem ist für Belastungen in einer grossen Zahl von Richtungen ausgerüstet, dadurch, dass die Förderelemente eine Mehrzahl von Laufrollen aufweisen, denen an der Führung je ein Paar von einander gegenüberliegenden Führungsschienen zugeordnet sind und/oder die nicht parallele Achsen haben. Die Führung des erfindungsgemässen Fördersystems ist insbesondere ein Führungskanal, in dem die Förderelemente rollen (Innenläufer), kann aber auch balkenförmig ausgebildet sein und von den Förderelementen umgriffen werden, wobei auf mehreren Seiten der Führung Laufrollen abrollen (Aussenläufer). Die Förderelemente des erfindungsgemässen Fördersystems sind insbesondere miteinander zu einer Förderkette verbunden und werden durch Kettenräder angetrieben, können aber auch voneinander im wesentlichen unabhängig sein und einander stossend oder einzeln an entsprechenden Antrieben angekoppelt bewegt werden.

Fördersysteme mit auf Laufrollen in einem Führungskanal abrollenden, zu einer Förderkette miteinander verbundenen Förderelementen finden bekannterweise Anwendung zur Förderung von Stückgut zwischen Bearbeitungsstationen, insbesondere zur Förderung von grossen Zahlen von Druckprodukten wie Zeitungen, Zeitschriften und Broschüren im Bereiche eines Versandraumes, wo die Druckprodukte ab Druckmaschine beispielsweise zusammengestellt, geheftet, gebunden, adressiert, geschnitten, gestapelt, verpackt und für den Versand bereitgestellt werden. In diesen Fördersystemen sind die Förderelemente üblicherweise mit Greifern ausgerüstet, die aus dem Führungskanal ragen, und es sind Steuermittel vorgesehen, mit deren Hilfe die Greifer an Beladestellen zum Ergreifen je eines Gegenstandes geschlossen und an Entladestellen zum Entlassen des Gegenstandes geöffnet werden.

Je nach Ausgestaltung von Förderelementen und Führung ist es mit Fördersystemen der genannten Art ohne weiteres möglich, Förderwege zu realisieren mit in weiten Grenzen wählbaren Biegungen, Steigungen und auch Verwindungen, so dass diese Systeme sich insbesondere eignen zur Realisierung von dreidimensionalen Förderweganordnungen, in denen die geförderte Last an verschiedenen Förderwegstellen die Förderelemente und die Führung in verschiedenen Richtungen belasten und Laständerungen sehr häufig und schnell nacheinander auftreten. Ähnliche Lastwechsel können auch auftreten in Förderwegbiegungen und bei Wechseln zwischen stossendem zu ziehendem Betrieb. Für die problemlose Bewältigung dieser Lastwechsel sind die Förderelemente wie bereits eingangs erwähnt mit Laufrollen mit voneinander verschiedenen Achsrichtungen ausgerüstet und/oder sind an der Führung für dieselben Laufrollen zwei einander gegenüberliegende Führungsschienen vorgesehen. Je nach Belastungszustand wird dann die Last über die einen oder anderen Laufrollen und/oder über die eine oder andere Führungsschiene in die Führung eingekoppelt.

Aus verschiedenen Gründen laufen die Förderelemente der genannten Fördersysteme mit Spiel entlang der Führung, so dass bei Lastwechseln relativ hohe Beschleunigungen quer zur Förderrichtung auftreten, die zu stossartigen Berührungen zwischen Laufrollen und Führung und zu rutschenden Querbewegungen der Laufrollen auf den Führungsschienen führen können. Ferner müssen Laufrollen, denen zwei Führungsschienen zugeordnet sind, bei gleichbleibender Förderrichtung je nach Belastung, also abhängig davon, auf welcher der ihr zugeordneten Führungsschienen sie laufen, in verschiedenen Richtungen abrollen, so dass ihre Drehbewegung bei Lastwechseln gestoppt und in der Gegenrichtung wieder beschleunigt werden muss, was zu hohen Reibungskräften zwischen Laufrollen und Führungsschienen führen kann. Es kann auch vorkommen, dass in Biegungen Förderelemente nicht genau parallel zur Förderrichtung ausgerichtet gefördert werden und dadurch Laufrollen gleichzeitig mit zwei ihnen zugeordneten Führungsschienen in Kontakt sind und gezwungenermassen darauf rutschen, was wiederum zu hoher Reibung zwischen Laufrolle und Führungsschiene führt.

Die durch die genannten Zustandsänderungen bedingten Reibungs- und Stosskräfte sind nicht nur die Ursache von Verschleiss an Laufrollen und Führungsschienen und von Lärm sondern sie wirken sich auch auf die für die Förderung aufzubringende Antriebsleistung negativ aus, wobei alle genannten Effekte sich mit höher werdenden Fördergeschwindigkeiten und Häufigkeiten von Lastwechseln entlang des Förderweges verschärfen.

Den genannten Problemen wird gemäss dem Stande der Technik begegnet, indem die Laufrollen mit einem Laufmantel versehen werden, der durch ein entsprechendes Material und eine entsprechende Form dazu ausgerüstet wird, auftretende Stösse durch Deformation dämpfen zu können, wobei aber die Wahl des Laufmantelmaterials durch die Anforderung eines möglichst kleinen Verschleisses stark limitiert bleibt.

Bekannte Laufrollen, die in Fördersystemen der genannten Art im Einsatz sind, weisen also einen Rollenkörper auf, der über ein Kugellager auf einer Welle gelagert oder fix auf einer entsprechend gelagerten Welle montiert frei um eine Achse drehbar ist, sowie einen um den Umfang des Rollenkörpers verlaufenden Laufmantel, der aus einem thermoplastischen Material mit einem Elastizitätsmodul von üblicherweise ca. 400 bis 1600 MPa besteht und eine quer zur Laufrichtung konvexe Lauffläche hat, wobei die der Laufrolle zugeordneten Führungsschienen quer zur Förderrichtung eben sind. Der Laufmantel wird üblicherweise in einem Spritzgussverfahren hergestellt und auf den Rollenkörper aufgeschnappt, derart, dass der montierte Laufmantel gespannt ist, so, dass der durch diese Spannung bedingte Reibschluss Relativdrehungen zwischen Laufmantel und Rollenkörper verhindert.

Aus den obigen Erläuterungen wird ersichtlich, wie viele Bedingungen durch das Laufmantelmaterial zu erfüllen sind, und es geht auch daraus hervor, dass es bei der Wahl des Laufmantelmaterials kaum darum gehen kann, alle oder einen Teil der Bedingungen optimal zu erfüllen, sondern höchstens darum, einen geeigneten Kompromiss zu finden. Weitere Probleme der bekannten Laufrollen ergeben sich einerseits aus der Weichheit des Laufmantelmaterials und aus der Giessfahne. Die Weichheit und Kriechfähigkeit des spritzgiessbaren Laufmantelmaterials führt bei Stillstand unter Belastung dazu, dass die Rollen unrund werden und dadurch unruhig laufen. Die Giessfahne, die sich da, wo der Laufmanteldurchmesser am grössten ist, um den Umfang des Laufmantels erstreckt, weil bedingt durch die konvexe Lauffläche die Giessform an dieser Stelle getrennt werden muss, müsste für einen einwandfreien Betrieb durch eine geeignete Bearbeitung eigentlich entfernt werden, was aber zusätzlichen Herstellungsaufwand darstellt und üblicherweise deshalb nicht getan wird.

Es ist nun die Aufgabe der Erfindung, ein Fördersystem der eingangs genannten Art mit einer Führung und mit Förderelementen, die auf Laufrollen rollend entlang der Führung bewegt werden, zu schaffen, wobei das Fördersystem verglichen mit bekannten Fördersystemen derselben Art ruhiger laufen soll und trotzdem weniger reibungsbedingten Verschleiss aufweist, bei gleicher Förderleistung weniger Antriebsleistung benötigt und erst noch herstellungstechnisch Vereinfachungen bringen kann. Ferner ist es die Aufgabe der Erfindung, ein Verfahren zur Herstellung von Laufrollen für das erfindungsgemässe Fördersystem zu schaffen.

Diese Aufgabe wird gelöst durch das Fördersystem und das Herstellungsverfahren, wie sie in den Ansprüchen definiert sind.

Die Verbesserung gemäss Erfindung greift an den Laufrollen und an den Führungsschienen des Fördersystems an, wobei die Stossdämpfungsfunktion von der Laufflächenfunktion getrennt wird, so dass die Laufflächen der Laufrollen und der Führungsschienen quer zur Förderrichtung eben ausgestaltet werden können und aus einem relativ harten, abriebfesten Material mit einem kleinen Reibungskoeffizienten bestehen können. Die Stossdämpfungsfunktion wird dabei von der Laufrolle und, mindestens an Förderwegstellen, an denen Lastwechsel auftreten, auch von den Führungsschienen übernommen und zwar von einem zwischen Laufmantel und Rollenkörper vorgesehenen Dämpfungsring und von Dämpfungsunterlagen, auf denen die Führungsschienen gelagert sind. Dabei bestehen Dämpfungsring und Dämpfungsschiene aus einem relativ weichen, elastisch deformierbaren Material. Förderwegstellen, an denen Lastwechsel auftreten können, sind insbesondere Biegungen mit sich änderndem Biegeradius, Verwindungen, Stellen, an denen die Förderelemente beladen oder entladen werden oder Stellen an denen die Förderelemente beschleunigt oder gebremst werden.

Das Laufmantelmaterial und das Führungsschienenmaterial sind für wenig Reibung und wenig Abrieb aufeinander abgestimmt. Sie haben je ein Elastizitätsmodul von mehr als 3000 MPa. Das Material von Dämpfungsring und Dämpfungsunterlage ist auf gute Stossdämpfung durch elastische Deformation abgestimmt und hat eine Härte im Bereiche von ca. 35 bis 98 (Shore A), vorteilhafterweise zwischen 50 und 80.

Das Laufmantelmaterial ist beispielsweise ein Kunststoff (z.B. Polyamid), das Führungsschienenmaterial ist ein Metall oder ein Kunststoff wie das Laufmantelmaterial. Das Material von Dämpfungsring und Dämpfungsunterlage ist ebenfalls ein Kunststoff, beispielsweise ein Elastomer.

Der Rollenkörper besteht in bekannter Weise beispielsweise aus Metall oder aus einem entsprechend harten Kunststoff mit einem Elastizitätsmodul im Bereich von mindestens 7000 MPa. Laufmantel und Dämpfungsring sitzen vorteilhafterweise spannungsfrei auf dem Rollenkörper und können stoff- oder formschlüssig gegen Drehbewegungen gegeneinander gesichert sein.

Für die Herstellung der Laufrollen mit Dämpfungsring wird der Laufmantel und der Rollenkörper vorfabriziert. Dann werden Rollenkörper und Laufmantel in einer Spritzgussform koaxial positioniert und der Dämpfungsring wird dazwischen gegossen. Da der Laufmantel eine ebene Lauffläche aufweist, kann er beispielsweise durch Abdrehen von einem rohrförmigen Werkstück hergestellt werden. Da der Laufring und der Rollenkörper als Giessformteile für die Herstellung des Dämpfungsringes eingesetzt werden, können zwischen Laufmantel und Dämpfungsring und/oder zwischen Dämpfungsring und Rollenkörper formschlüssige Strukturen vorgesehen werden, durch die Relativbewegungen zwischen den je zwei Rollenteilen verhindert werden. Dadurch wird es möglich, dass Dämpfungsring und Laufmantel in der Laufrolle spannungsfrei sind.

Bevorzugte Ausführungsformen des erfindungsgemässen Fördersystems werden im Zusammenhang mit den folgenden Figuren im Detail beschrieben. Dabei zeigen:
- **Figuren 1 und 2**: eine beispielhafte Ausführungsform des erfindungsgemässen Fördersystems quer zur Förderrichtung geschnitten (Fig. 1) und als Seitenansicht (Fig. 2);
- **Figur 3**: eine weitere beispielhafte Ausführungsform des erfindungsgemässen Fördersystems (quer zur Förderrichtung geschnitten);
- **Figuren 4 und 5**: eine erfindungsgemäss ausgerüstete Laufrolle in grösserem Massstab, in axialer Richtung geschnitten (Fig. 3) und quer zur Achse geschnitten (Fig. 4);
- **Figur 6**: einen Querschnitt durch ein Beispiel eines erfindungsgemäss ausgerüsteten Führungskanals.

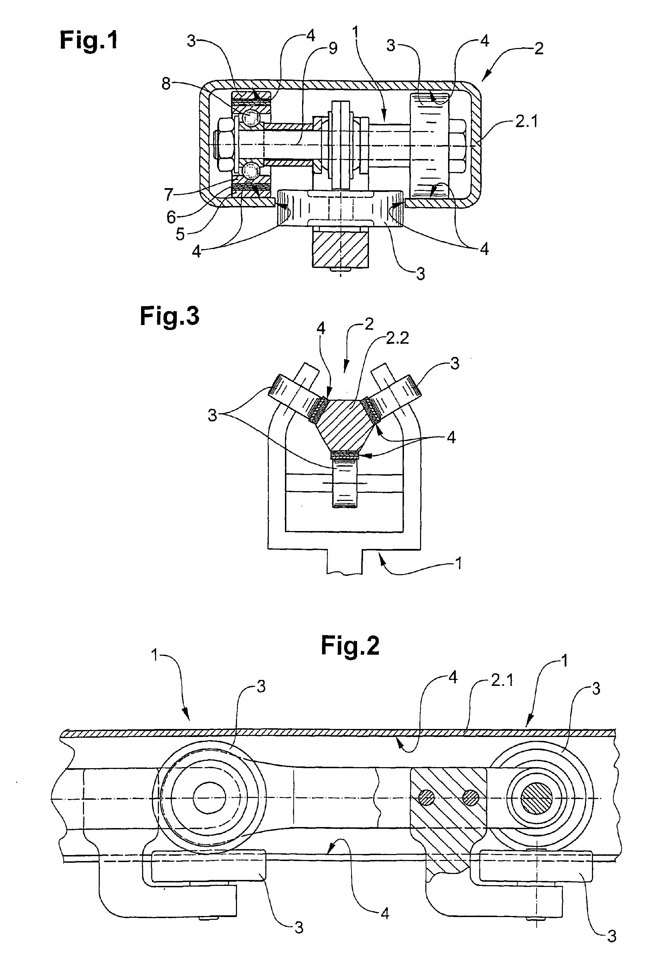

**Figuren 1 und 2** zeigen quer zur Förderrichtung geschnitten (Fig. 1) und als Seitenansicht (Fig. 2) eine beispielhafte Ausführungsform des erfindungsgemässen Fördersystems, bzw. die als Kettenglieder ausgebildeten Förderelemente 1 und die als Führungskanal 2.1 ausgebildete Führung 2 davon. Die Förderelemente 1 sind im dargestellten Falle mit je drei Laufrollen 3 ausgerüstet, für die im Führungskanal 2 je zwei Führungsschienen 4 vorgesehen sind. An dem aus dem Führungskanal ragenden Teil des Förderelementes 1 ist beispielsweise ein nicht dargestellter Greifer montiert.

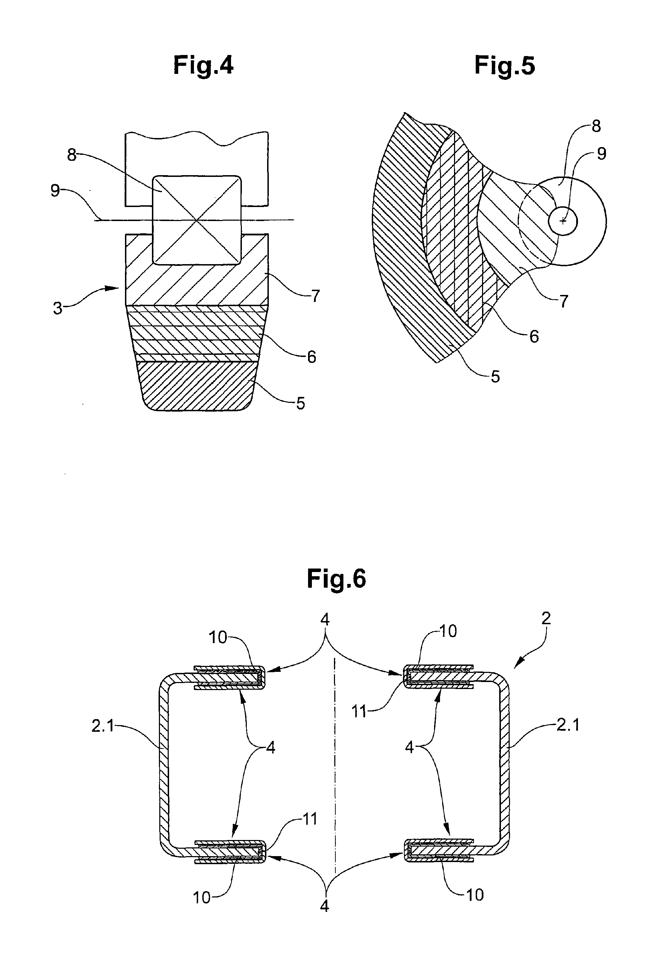

Die Laufrollen 3 weisen im dargestellten Falle einen Laufmantel 5, einen Dämpfungsring 6 und einen Rollenkörper 7 mit einem Kugellager 8 auf und sind um eine Achse 9 frei drehbar. Die Führungsschienen 4 können in einem beispielsweise aus Metall oder aus einem harten Kunststoff hergestellten Führungskanal 2.1 und an Förderwegstellen, an denen keine Lastwechsel auftreten, einfach als entsprechend ebene Oberflächenbereiche des Kanalprofils ohne spezielle Ausrüstung ausgebildet sein, wie dies in den Figuren 1 und 2 dargestellt ist. In denselben Fällen können die Führungsschienen 4 aber auch als beispielsweise gehärteter Oberflächenbereich, als entsprechende Oberflächenbeschichtung oder als im Führungskanal 2.1 montierte Schienen ausgebildet sein. Mindestens an Förderwegstellen, an denen Lastwechsel auftreten können, sind Führungsschienen 4 vorgesehen, wobei zwischen Führungsschiene und Führungskanal 2.1 relativ weiche, der Stossdämpfung dienende Dämpfungsunterlagen vorgesehen werden, wie dies im Zusammenhang mit der Figur 6 noch detailliert werden soll. Selbstverständlich können auch Förderwegstellen, an denen keine Lastwechsel auftreten in der genannten Weise ausgerüstet sein.

Sowohl die Laufflächen der Führungsschienen 4 als auch die Laufflächen der Laufrollen 3 sind vorteilhafterweise quer zur Förderrichtung eben, mindestens in einem mittleren Bereich, der einen relevanten Teil der Breite der Lauffläche ausmacht.

In Fördersystemen, wie sie in den Figuren 1 und 2 dargestellt sind, werden beispielsweise Förderelemente von etwa 10 cm Länge vorgesehen (30 Laufrollen pro Meter Kettenlänge), die sich bei üblichen Geschwindigkeiten von einigen Metern pro Sekunde mit über 1000 U/min drehen und deren Drehrichtung sich in einem Intervall von wenigen Sekunden ändern kann, wobei in Laufrichtung und quer dazu Reibungskräfte im Bereich von mehreren 100 N pro Laufrolle auftreten können. Aus den genannten Zahlen kann abgeschätzt werden, wie viel Förderleistung eingespart werden kann, wenn die Laufflächen der Laufrollen und der Führungsschienen für minimale Reibung ausgerüstet werden können. Die für minimale Reibung ausgelegte Materialpaarung zwischen Laufflächen von Führungsschienen und Laufrollen führt aber zu Verschleiss durch harte Stösse und zu Lärm, was durch die gleichzeitig angewendeten Dämpfungsmassnahmen markant reduziert werden kann.

**Figur 3** zeigt quer zur Förderrichtung geschnitten ein weiteres Beispiel eines Fördersystems (Aussenläufer), das erfindungsgemäss ausgerüstet ist. Die Führung 2 dieses Fördersystems ist als Führungsbalken 2.2 ausgebildet und weist auf verschiedenen Seiten Führungsschienen 4 auf, die Laufrollen 3 mit nicht parallelen Achsen zugeordnet sind, wobei das Förderelement 1, das die Laufrollen 3 trägt, die Führung 2 umgreift. Für einen Aussenläufer fällt das Problem der Drehrichtungsänderung der Laufrollen 3 bei Laständerungen weg. Es bleibt aber das Problem der Stösse zwischen Führung 2 und Förderelement 1 bei Lastwechseln und das Problem des Rutschens quer zur Förderrichtung bei Lastwechseln und Richtungsänderungen, die in der gleichen Weise gelöst werden können wie für den in den Figuren 1 und 2 dargestellten Innenläufer. Auch in diesem Falle sind die Führungsschienen 4 mindestens an Förderwegstellen, an denen Lastwechsel auftreten, auf Dämpfungsunterlagen 10 gelagert.

**Figuren 4 und 5** zeigen eine weitere erfindungsgemäss ausgerüstete Laufrolle 3 in einem etwas grösseren Massstab als die Figuren 1 und 2. Die Laufrolle weist wiederum einen Laufmantel 5, einen Dämpfungsring 6 und einen Rollenkörper 7 mit einem Kugellager 8 auf. Anstelle des Kugellagers 8 kann auch ein anderes geeignetes Lager vorgesehen werden. Ferner ist es möglich, den Rollenkörper 7 starr auf einer Welle zu montieren und die Welle an einer anderen Stelle in geeigneter Weise zu lagern. Es ist sogar möglich, Welle und Rollenkörper als ein einziges Stück herzustellen.

Der Laufmantel 5 besteht vorteilhafterweise aus einem Kunststoffmaterial mit einem Elastiziätsmodul von über 3000 MPa (Zugbelastung), vorzugsweise aus einem entsprechenden Polyamid, z.B. Tecaglide (Handelsname). Da der Laufmantel 5 eine ebene Lauffläche aufweist, kann er in einfacher Weise aus einem rohrförmigen Werkstück, beispielsweise durch Abdrehen hergestellt werden, so dass es nicht notwendig ist, dass das Material spritz-giessbar ist, also auch ein Duroplast sein kann oder ein Gusspolyamid.

Der Dämpfungsring besteht beispielsweise aus einem spritzgiessbaren Elastomer mit einer Härte von zwischen 50 und 80 (Shore A), beispielsweise aus Santoprene (Handelsname, Advanced Elastomer Systems), das z.B. mit einer Härte von 55 oder 73 erhältlich ist.

Der Rollenkörper kann aus einem metallischen Werkstoff bestehen oder einem verstärkten Kunststoff mit ähnlicher Festigkeit, beispielsweise aus Grivory (Handelsname, EMS Chemie) oder Orgalloy (Handelsname, Atofina FR), die ein Elastizitätsmodul im Bereiche von 7'000 bis 10'000 MPa aufweisen.

Für eine Rolle mit einem Durchmesser von ca. 40 mm ist der Laufmantel 5 beispielsweise etwa 2 bis 4 mm dick. Bei der oben genannten Materialpaarung von Laufmantel und Dämpfungsring reicht für den Dämpfungsring 6 eine etwa gleiche Dicke, also ebenfalls 3 bis 4 mm.

Es zeigt sich, dass bei Verwendung der genannten Rollen nicht nur der Betriebslärm und der Verschleiss markant reduziert werden können, sondern dass auch die für den Betrieb notwendige Energie insbesondere dank der relevanten Reibungsreduktion markant kleiner ist als bei Verwendung der bekannten Rollen. Ferner bleiben die Rollen absolut rund, auch wenn Stillstände in belastetem Zustand relativ häufig auftreten.

Da die Laufrolle 3 durch Giessen des Dämpfungsrings 6 zwischen dem Laufmantel 5 und dem Rollenkörper 7 hergestellt wird, ist es möglich, ohne Spannung weder des Laufmantels 5 noch des Dämpfungsrings 6 Relativdrehungen zwischen Laufmantel 5 und Dämpfungsring 6 und zwischen Dämpfungsring 6 und Rollenkörper 7 zu verhindern durch eine Materialpaarung die an diesen Grenzflächen zu einem Stoffschluss führen oder durch formschlüssige Strukturen, z.B. axial verlaufende Rillen und Kämme, wie sie in der Figur 5 dargestellt sind. Auch um den Umfang der Ringe verlaufende formschlüssige Strukturen (z.B. Nuten und Kämme, wie in der Figur 4 dargestellt) können einfach realisiert werden. Diese tragen zur Stabilität der Rolle bei seitlicher Belastung bei.

Figur 6 zeigt im Querschnitt eine Führung 2 für ein erfindungsgemässes Fördersystem, die als Führungskanal 2.1 ausgebildet ist und eine ähnliche Form hat wie der Führungskanal gemäss Figur 1. Die Führungsschienen 4 dieses Führungskanals 2.1 sind erfindungsgemäss ausgerüstet, das heisst auf einer Dämpfungsunterlage 10 gelagert. Die Führungsschienen 4 bestehen aus einem Metall oder aus einem relativ harten Kunststoff, dessen relevante Eigenschaften etwa die gleichen sind wie die oben beschriebenen Eigenschaften des Laufmantelmaterials. Die Dämpfungsunterlagen 10 bestehen aus einem weicheren Kunststoff mit Eigenschaften, wie sie oben für das Material des Dämpfungsrings 6 der Laufrollen 3 beschrieben sind. Herstellungstechnisch bringt die erfindungsgemässe Ausrüstung der Führungsschienen 4 insbesondere Vorteile für diejenigen Führungsschienen, die an der Kanalkante 11 angeordnet sind und üblicherweise als U-förmiges Profil ausgebildet sind, das über die Kanalkante 11 gestossen wird. Die zwischen Führungsschiene 4 und Kanalkante 11 anzuordnende Dämpfungsunterlage 10 kann dabei ebenfalls als U-förmiges Profil ausgebildet sein und derart dimensioniert, dass sie bei der Montage komprimiert wird und die daraus entstehende Druckspannung auf die Führungsschiene 4 genügt, um diese reibschlüssig in Position zu halten.

Wie aus der Figur 6 ersichtlich ist, kann das U-förmige Führungsschienenprofil breitere Schenkel aufweisen, die dann auf der Kanalinnenseite direkt als weitere, auf der Dämpfungsunterlage gelagerte Führungsschienen benützt werden können.

Ein erfindungsgemässes Fördersystem weist also Laufrollen auf mit einem relativ harten Laufmantel, dessen Querschnitt im Betrieb nicht wesentlich deformiert wird. Dieser Laufring ist kombiniert mit einem Dämpfungsring an der Laufrolle und, mindestens an Förderwegstellen, an denen Lastwechsel auftreten, mit einer Dämpfungsunterlage unter der Führungsschiene. Dabei ist es keine Bedingung für das erfindungsgemässe System, dass alle Laufrollen und alle Führungsschienen in der genannten Weise ausgerüstet sind.

## Patentansprüche

1. Fördersystem mit einer Führung (2) und mit Förderelementen (1), die auf Laufrollen (3) entlang von Führungsschienen (4) der Führung (2) rollend bewegbar sind, wobei die Führungsschienen einen Förderweg definieren, der Förderwegstellen aufweist, an denen Lastwechsel auftreten, wobei jedes Förderelement (1) eine Mehrzahl von Laufrollen (3) mit ersten Laufflächen und die Führung (2) eine Mehrzahl von Führungsschienen (4) mit zweiten Laufflächen aufweist, wobei zur Einkoppelung von verschieden gerichteten Belastungskräften die Führungsschienen (4) mindestens teilweise in einander gegenüberliegenden Paaren einer spezifischen Laufrolle (3) zugeordnet sind und/oder Laufrollen (3) mit nicht parallelen Achsen vorgesehen sind, und wobei die Laufrollen (3) einen um eine Achse (9) frei drehbaren Rollenkörper (8) und einen die erste Lauffläche bildenden Laufmantel (5) aufweisen, **dadurch gekennzeichnet, dass** die Laufrollen (3) einen zwischen dem Rollenkörper (7) und dem Laufmantel (5) angeordneten Dämpfungsring (6) aufweisen und die Führungsschienen (4) mindestens an Förderwegstellen, an denen Lastwechsel auftreten, auf einer Dämpfungsunterlage (10) gelagert sind, wobei Dämpfungsring (6) und Dämpfungsunterlage (10) aus einem Material bestehen, das ein kleineres Elastitzitätsmodul hat als das Material von Laufmantel (5) und Führungsschienen (4).

2. Fördersystem nach Anspruch 1, **dadurch gekennzeichnet, dass** der Laufmantel (5) der Laufrollen (3) und die Führungsschienen (4) der Führung (2) aus einem Material mit einem Elastizitätsmodul von mehr als 3000 MPa bestehen.

3. Fördersystem nach Anspruch 1 oder 2, **dadurch gekennzeichnet, dass** die ersten und die zweiten Laufflächen quer zur Ausrichtung der Führung (2) eben sind.

4. Fördersystem nach einem der Ansprüche 1 bis 3, **dadurch gekennzeichnet, dass** der Dämpfungsring (6) und der Laufmantel (5) spannungsfrei sind.

5. Fördersystem nach Anspruch 4, **dadurch gekennzeichnet, dass** der Dämpfungsring (6) gegenüber dem Rollenkörper (7) und/oder gegenüber dem Laufmantel (5) durch Stoffschluss oder durch Formschluss drehgesichert ist.

6. Fördersystem nach einem der Ansprüche 1 bis 5, **dadurch gekennzeichnet, dass** das Material von Dämpfungsring (6) und Dämpfungsunterlage (11) eine Shorehärte A im Bereich von 35 bis 98 aufweist.

7. Fördersystem nach Anspruch 6, **dadurch gekennzeichnet, dass** das Material von Dämpfungsring (6) und Dämpfungsunterlage (11) ein Elastomer ist.

8. Fördersystem nach einem der Ansprüche 1 bis 7, **dadurch gekennzeichnet, dass** das Material des Laufrings (5) ein Polyamid und das Material der Führungsschienen (4) ein Metall oder ein verstärkter Kunststoff ist.

9. Fördersystem nach einem der Ansprüche 1 bis 8, **dadurch gekennzeichnet, dass** die Führung (2) als Führungskanal (2.1) ausgebildet ist und dass mindestens ein Teil der Führungsschienen (4) als über eine Kante (11) des Kanalprofils gestossenes U-förmiges Profil ausgebildet ist, wobei zwischen dem U-förmigen Profil der Führungsschienen (4) und der Kante (11) die Dämpfungsunterlage (10) angeordnet ist, die ebenfalls als U-förmiges Profil ausgebildet ist.

10. Verfahren zur Herstellung einer Laufrolle (3) für ein Fördersystem nach einem der Ansprüche 1 bis 9, **dadurch gekennzeichnet, dass** ein vorfabrizierter Rollenkörper (7) und ein vorfabrizierter Laufmantel (5) koaxial in einer Spritzgussform positioniert werden und dass zwischen dem Rollenkörper (7) und dem Laufmantel (5) ein Dämpfungsring (6) gegossen wird.

11. Verfahren nach Anspruch 10, **dadurch gekennzeichnet, dass** der Laufmantel (5) aus einem rohrförmigen Werkstück vorfabriziert wird.
